# NEW EUROPEAN PATENT SPECIFICATION

(11) **EP 1 545 160 B2**
(45) Date of publication and mention of the opposition decision: **24.04.2013**
(45) Mention of the grant of the patent: 11.07.2007
(21) Application number: 04029488.6
(22) Date of filing: 13.12.2004
(51) Int. Cl.: H05B 6/80

(54) **Microwave oven provided with a separate heater cooking chamber**
Mikrowellenofen versehen mit einer getrennten Garkammer
Four à micro-ondes avec une chambre de cuisson séparée

(30) Priority: 18.12.2003 KR 2003093008; 18.12.2003 KR 2003093078; 23.12.2003 KR 2003095195; 23.12.2003 KR 2003095196; 23.12.2003 KR 2003095197; 23.12.2003 KR 2003095223; 23.12.2003 KR 2003095224
(43) Date of publication of application: 22.06.2005
(73) Proprietor: Daewoo Electronics Corporation, Seoul (KR)
(72) Inventor: Yang, Kyung Hoi, Mapo-gu Seoul (KR); Kim, Seung Hoe, Mapo-gu Seoul (KR); Cho, Dong Hee, Mapo-gu Seoul (KR); Cheong, Kil Ju, Mapo-gu Seoul (KR); Jin, Chang Sung, Mapo-gu Seoul (KR)
(74) Representative: Niederkofler, Oswald

(56) References cited:
- EP-A- 1 213 948
- EP-A- 1 441 569
- EP-A2- 1 213 948
- EP-A2- 1 441 569
- FR-A- 2 629 182
- FR-A3- 2 629 182
- US-A- 060 219
- US-A- 2 352 613
- US-A1- 2002 060 219
- PATENT ABSTRACTS OF JAPAN vol. 014, no. 135 (M-0949), 14 March 1990 (1990-03-14) -& JP 02 004131 A (MITSUBISHI ELECTRIC CORP; others: 01), 9 January 1990 (1990-01-09)
- PATENT ABSTRACTS OF JAPAN vol. 016, no. 090 (M-1218), 5 March 1992 (1992-03-05) -& JP 03 271630 A (MITSUBISHI ELECTRIC HOME APPLIANCE CO LTD; others: 01), 3 December 1991 (1991-12-03)

## Description

The present invention relates to a microwave oven; and more particularly, to a microwave oven provided with a separate heater cooking chamber capable of cooking foodstuffs such as pizza which are difficult to be properly cooked by using a microwave.

Conventionally, a microwave oven is an appliance for cooking foodstuffs by using a microwave, and includes a microwave cooking chamber in which the foodstuffs are inserted to be cooked and an electric component compartment containing therein electric component including a magnetron for irradiating the microwave into the microwave cooking chamber.

However, the conventional microwave oven is not appropriate for the cook of, e.g., pizza since the cooking is carried out by using the microwave only as a heat source. For example, when a pizza is cooked, a pizza crust should be cooked until it is crispy in nature without driving too much water out of toppings on the crust. Therefore, the conventional microwave oven has been used to merely warm a pizza that was already cooked.

US 2002/060219 A1 discloses a space saving cooking appliance having a shape that conserves counter space and/or room space with either a prism shaped outer case that has an apex in the rear to match a corner, or a flat back that can be pushed up against a wall. The front of the appliance can be curved or arcuate forming a part of an ellipse or circle. The cooking space inside the appliance can be cylindrical or spherical, and in the case where the appliance is a microwave oven, can form a cylindrical or spherical cavity where a uniform cavity mode field can be excited to promote uniform cooking. On the front of the arcuate surface there can be a door that completes the arcuate surface when it closes, and on its inner side is shaped so that it completes the cylindrical or spheroidal cooking space when it is closed. One embodiment is a partial spheroid appliance with a flat bottom. The cooking space in this case is a partial spheroid. In all embodiments, auxiliary side appliances can be located left and right of the main cooking area. These auxiliary appliances can be stacked and can be of many different types including a toaster, rotisserie, grill, broiler, BBQ, egg cooker, coffee maker, and many other auxiliary cooking appliances.

FR 2 629 182 discloses a twin-compartments cooking oven with insulating divider - has upper section with gas burner and own door, and lower section with heating element and circulating fan.

EP 1 213 948 A2 discloses a microwave oven having a toaster, in which slices of bread can be baked. The microwave oven has a heating chamber for heating food therein; an instrument compartment containing electric components for generating microwave oven supplied to the heating chamber; a toaster casing disposed in front of the instrument compartment with its front open; a toaster door for opening and closing the open front of the toaster casing; and at least a heater disposed in the toaster casing so as to heat bread. In the microwave oven, the toaster section is arranged in front of the instrument compartment, so that the space in the microwave oven is most effectively utilized.

US 2,352,613 discloses an oven having food supporting means mounted to the oven's door.

It is, therefore, an object of the present invention to provide a microwave oven provided with a separate heater cooking chamber capable of cooking a food product, e.g., pizza, that is difficult to be properly cooked by using only a microwave.

In accordance with an aspect of the present invention, there are provided microwave ovens according to the independent claims.

It is noted that only those embodiments indicated in the following, which are covered by the independent claims, are embodiments according to the present invention. In contrast thereto, examples not covered by the independent claims are no part of the invention even if referred to as embodiments of the present invention.

It is further noted that the term "conical-shaped" indicates shapes of circular-sectors, which latter term being used in the claims.
Fig. 1 offers a perspective view of a microwave oven provided with a separate heater cooking chamber in accordance with a first preferred embodiment, which is not part of the present invention;
Fig. 2 gives an exploded view of the microwave oven in Fig. 1;
Fig. 3 provides a front view of the microwave oven in Fig. 1 with a door for the heater cooking chamber removed;
Fig. 4 represents an exploded perspective view of a microwave oven provided with a separate heater cooking chamber in accordance with a second preferred embodiment, which is not part of the present invention;
Fig. 5 depicts a cross sectional view taken along the line A-A in Fig. 4;

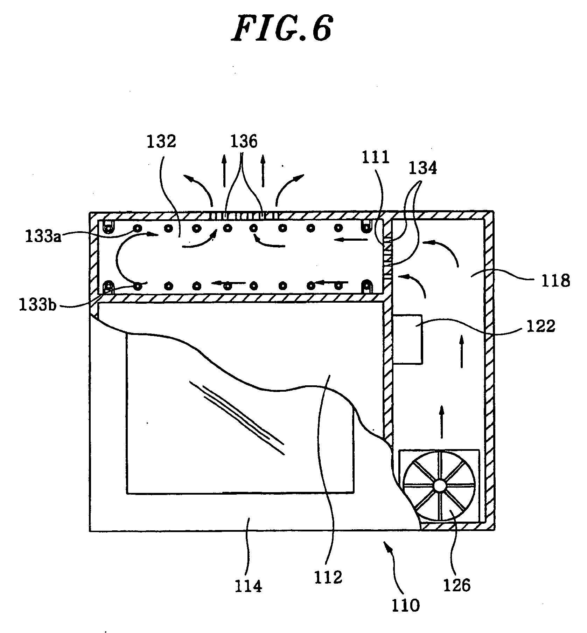

Fig. 6 describes a cross section view of the microwave oven of the second preferred embodiment showing an air flow through air introduction holes and air exhaust holes;
Fig. 7 illustrates an exploded perspective view of a microwave oven provided with a plurality of separate heater cooking chambers in accordance with a third preferred embodiment of the present invention;
Fig. 8 sets forth a front view of the microwave oven of the third preferred embodiment with doors for the respective heater cooking chambers removed;
Fig. 9 shows a schematic top view of a mechanism for rotating a pan in a microwave oven provided with a separate heater cooking chamber in accordance with a fourth preferred embodiment, which is not part of the present invention;
Fig. 10 describes a schematic cross sectional view of the pan rotating mechanism in Fig. 9;
Fig. 11 offers a perspective view of a microwave oven provided with a separate heater cooking chamber in accordance with a fifth preferred embodiment, which is not part of the present invention, wherein pan pieces are disassembled;
Fig. 12 provides a perspective view of the microwave oven in Fig. 11, wherein the pan pieces are assembled together;
Fig. 13A presents a perspective view of the microwave oven in Fig. 11, wherein one pan piece is inserted into the heater cooking chamber;
Fig. 13B shows a perspective view of the microwave oven in Fig. 11, wherein two pan pieces are inserted into the heater cooking chamber;
Fig. 14 depicts a perspective view of a modification of the microwave oven of the fifth preferred embodiment;
Fig. 15 gives an exploded perspective view of a microwave oven provided with a separate heater cooking chamber in accordance with a sixth preferred embodiment of the present invention;
Fig. 16 sets forth a perspective view of the microwave oven in Fig. 15, wherein heaters are installed in the heater cooking chamber;
Fig. 17 provides a schematic front view of the microwave oven of the sixth preferred embodiment;
Fig. 18 presents an exploded perspective view of a microwave oven provided with a separate heater cooking chamber in accordance with a seventh preferred embodiment, which is not part of the present invention;
Fig. 19 is a perspective view of the microwave oven in Fig. 15, wherein reflects and heaters are installed in the heater cooking chamber; and
Fig. 20 shows a schematic front view of the microwave oven of the seventh preferred embodiment.

Hereinafter, preferred embodiments of a microwave oven provided with a separate heater cooking chamber in accordance with the present invention will be described in detail with reference to the accompanying drawings.

### (First preferred embodiment)

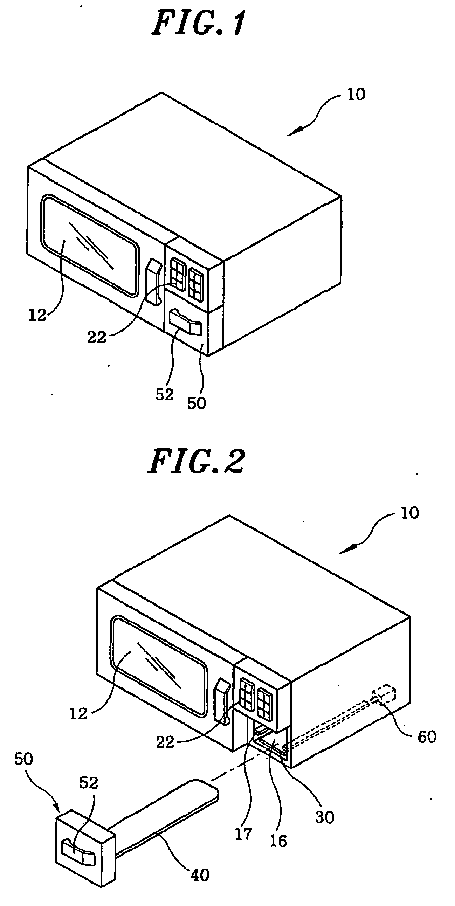

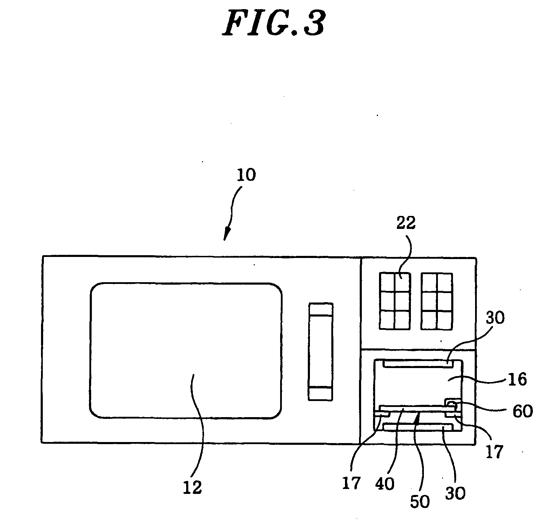

Referring to Figs. 1 to 3, there is shown a microwave oven provided with a separate heater cooking chamber in accordance with the first embodiment, which is not part of the present invention.

As shown in Figs. 1 to 3, the microwave oven 10 of the first embodiment includes a microwave cooking chamber 12, an electric component compartment (not shown), and a heater cooking chamber 16 provided in front of the electric component compartment.

As a heating unit, a pair of heaters 30 are installed at a top and a bottom portion in the heater cooking chamber 16, respectively, and a pair of guide members 17 are provided at both sidewalls of the heater cooking chamber 16, respectively. The guide members 17 serve to guide the movement of a pan 40 on which a foodstuff, e.g., pizza, is placed.

A door 50 is installed at a front side of the heater cooking chamber 16 and the pan 40 is integrated with the door 50. The door 50 has at its front surface a handgrip 52.

A limit switch 60 is provided on any one of the guide members 17. When a user inserts the pan 40 into the heater cooking chamber 16, the pan 40 is slidably moved on the guide members 17 therealong in the heater cooking chamber 16 and the leading end of the pan 40 comes in contact with the limit switch 60 to turn it on. Under the circumstances, if the user pushes a power button 22 for the heaters 30, the heaters 30 are actuated to cook a food product, e.g., pizza, placed on the pan 40.

Operation of the microwave oven of the first embodiment in accordance with the present invention will now be described.

In case of cooking, e.g., a pizza, a user places on the pan 40 a pizza crust on which various toppings are put. The user then inserts the pan 40 and hence the pizza crust into the heater cooking chamber 16 by grasping the handgrip 52 of the door. The pan 40 slides on the guide members 17 therealong to be inserted in the heater cooking chamber 16 and the door 50 closes the heater cooking chamber 16. At that time, the leading end of the pan 40 comes in contact with the limit switch 60 placed on one of the guide members 17 to turn it on.

Under the circumstances, if the user pushes the power button for the heaters 30, the heaters 30 are actuated to cook the pizza.

Meanwhile, under the condition that the limit switch 60 is in off state, even though the user pushes the power button for the heaters 30, the heaters 30 are not actuated, so that a safety accident due to misoperations of the heaters 30 can be previously prevented.

After the cooking of the pizza is completed, the user grasps the handgrip 52 of the door 50 and takes the pan 40 out from the heater cooking chamber 16.

In this embodiment, although there has been described one heater cooking chamber 16 provided at the side of the microwave cooking chamber 12, the number and the location of the heater cooking chamber 16 may be varied depending on the capacity and the size of the microwave oven.

### (Second preferred embodiment)

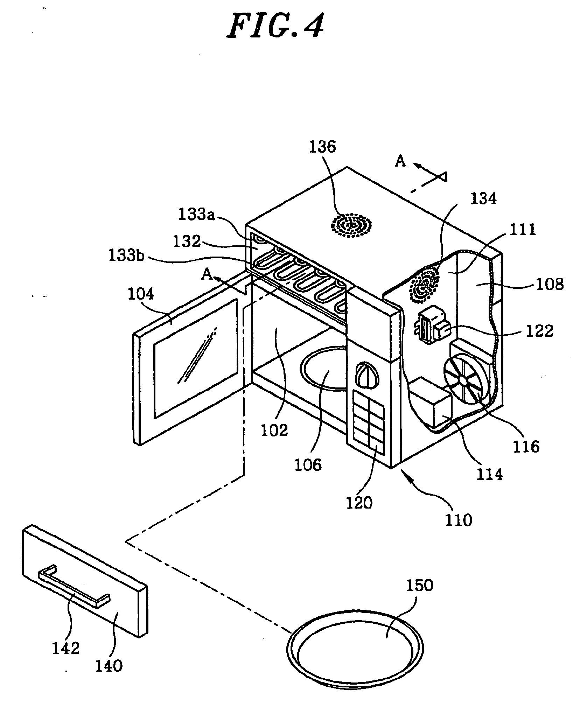

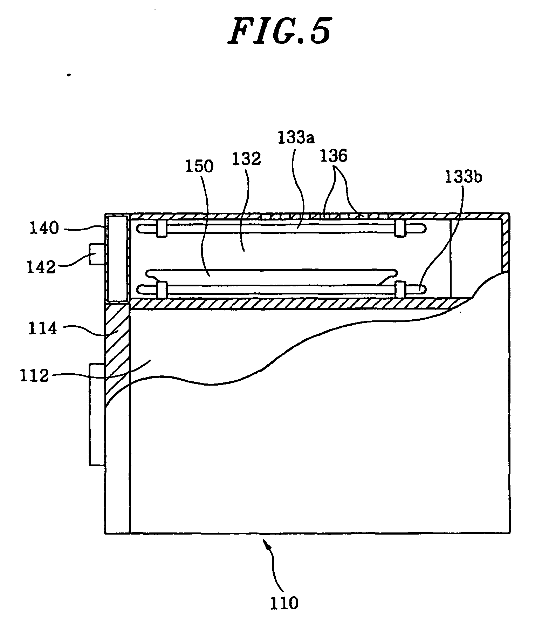

Hereinafter, a microwave oven provided with a separate heater cooking chamber in accordance with the second embodiment, which is not part of the present invention with reference to Figs. 4 and 5.

Referring to Figs. 4 and 5, the microwave oven 110 of the second embodiment includes a microwave cooking chamber 112, an electric component compartment 118, and a heater cooking chamber 132 provided above the microwave cooking chamber 112. The microwave cooking chamber 112 is closed by a door 114 with a window through which the inside thereof can be seen. On a bottom of the microwave cooking chamber 112, a turntable 116 is rotatably installed. In the electric component compartment 118, there are installed a magnetron 122, a high-voltage transformer 124 and a cooling fan 126 each of which is electrically connected to a control panel 120 provided at a front side of the microwave oven.

The heater cooking chamber 132 is for cooking a foodstuff, e.g., a pizza, which is difficult to be cooked by using only a microwave. An upper and a lower heater 133a, 133b, which are serpentinely extended, are installed as a heating unit at a top wall and the bottom wall of the heater cooking chamber 132, respectively. The upper and the lower heater 133a, 133b are electrically connected to the control panel 120. A heater cooking chamber door 140 is openably installed at a front side of the heater cooking chamber 132. The door 140 has at its front side a handgrip 142. On the lower heater 146, there is placed a pan 150 on which a foodstuff, e.g., pizza, is put.

Formed in a partition wall 111 between the heater cooking chamber 132 and the electric component compartment are a plurality of air introduction holes 134 through which external air is introduced into the heater cooking chamber 132 by the cooking fan 126. Further, formed in the top wall of the heater cooking chamber 132 are a plurality of air exhaust holes 136 through which the air introduced in the heater cooking chamber 132 is exhausted to the outside thereof. In this embodiment, although the air introduction and the air exhaust holes 134, 136 are shown to have a circular shape, they may have other shapes such as a rectangular and an elliptical shape.

Operation of the microwave oven of the second embodiment will now be described.

As shown in Figs. 4 and 5, in the microwave oven of the second embodiment, when cooked by the microwave, a foodstuff is placed in the microwave cooking chamber 112. A user manipulates the control panel 120 such that highfrequency waves generated by the magnetron 122 are irradiated into the microwave cooking chamber 112 to cook the foodstuff therein. After the cooking of the foodstuff is completed, the magnetron 122 and the high-voltage transformer 124 are cooled by an exterior air drawn into the electric component compartment by the cooling fan 126 and the exterior air is then introduced into the microwave cooking chamber 112 to cool the inside thereof.

Meanwhile, in case that, e.g., a pizza is cooked, a pizza crust on which toppings are put is placed in the heater cooking chamber 132. The pizza crust and the toppings are heated by the upper and the lower heater 133a, 133b. After the cooking of the pizza is completed, the cooling fan 126 is actuated to allow the exterior air to be introduced through the air introduction holes 134 into the heater cooking chamber 132. The air introduced in the heater cooking chamber 132 cools the heaters 133a, 133b and is then exhausted through the air exhaust holes 136 to the outside thereof. At that time, moisture generated in the heater cooking chamber 132 upon cooking of the pizza is discharged outside together with the exhausted air.

### (Third preferred embodiment)

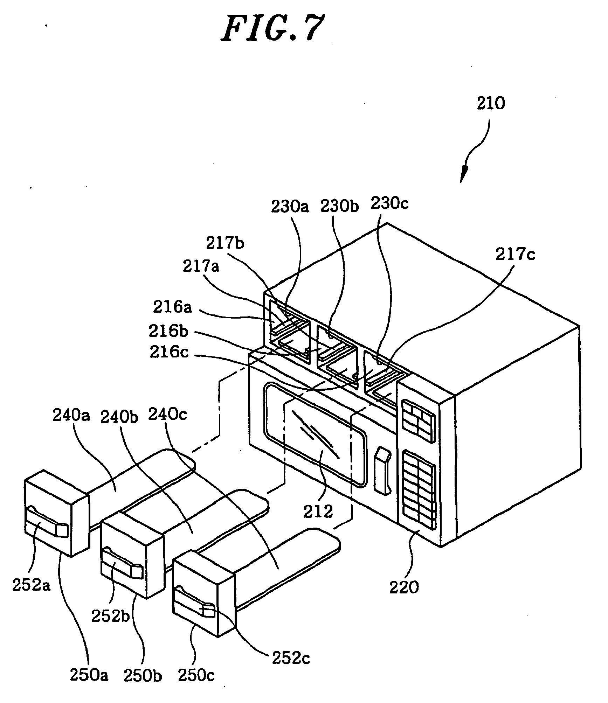

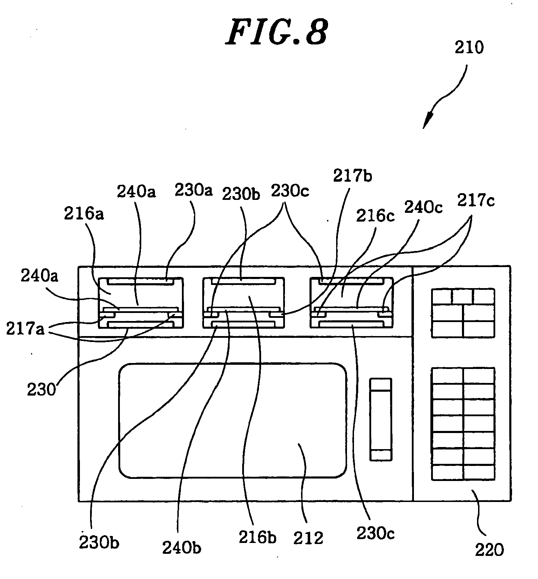

Hereinafter, a microwave oven provided with a separate heater cooking chamber in accordance with the third embodiment of the present invention with reference to Figs. 7 and 8.

As shown in Figs. 7 and 8, the microwave oven 210 of the second embodiment includes a microwave cooking chamber 212, an electric component compartment (not shown), and three heater cooking chambers 216a to 216c provided above the microwave cooking chamber 212. In this embodiment, although three heater cooking chambers 216a to 216c have been provided, the number of the heater cooking chambers may be properly set depending on a size and a capacity of the microwave oven 210. Further, although the heater cooking chambers 216a to 216c are configured to have a same dimension in this embodiment, they may be made in different sizes.

Three pairs of heaters 230a to 230c and three pairs of guide members 217a to 217c are provided in the heater cooking chambers 216a to 216c, respectively. Each pair of heaters 230a to 230c are installed as a heating unit at a top walls and a bottom wall of the corresponding heater cooking chamber 216a to 216c. Further, each pair of guide members 217a to 217c are provided at sidewalls of the corresponding heater cooking chamber 216a to 216c, respectively. Heater cooking chamber doors 250a to 250c are openably installed at front sides of the heater cooking chambers 216a to 216c, respectively. Pans 240a to 240c are inserted into the respective heater cooking chambers 216a to 216c.

The three pairs of heaters 230a to 230c can be independently operated by manipulating a control panel 220.

Operation of the microwave oven of the third embodiment will now be described.

When cooking, e.g., a pizza, a user places on each of the pans 240a to 240c a pizza crust having thereon toppings and inserts them together into the respective heater cooking chambers 216a to 216c. The pans 240a to 240c slide on the guide members 217 therealong. The heater cooking chambers 216a to 216c are closed by the respective doors 250a to 250c.

Under the circumstances, the user can manipulate the control panel 220 to actuate the heaters 216a to 216c independently.

In the microwave oven of the third embodiment, if the user wants to cook a small-sized pizza, the user can place it one of the pans 240a to 240c, e.g., the pan 240a, and inserts the pan 240a into one of the heater cooking chambers 216a to 216c, e.g., the heater cooking chamber 216a. The user can then manipulate the control panel 220 to actuate only the heater pair 230a in the chamber 216a to cook the small-sized pizza.

According to the microwave oven of the third embodiment, in case of cooking a small-sized pizza, it can be cooked in an energy-effective manner.

### (Fourth preferred embodiment)

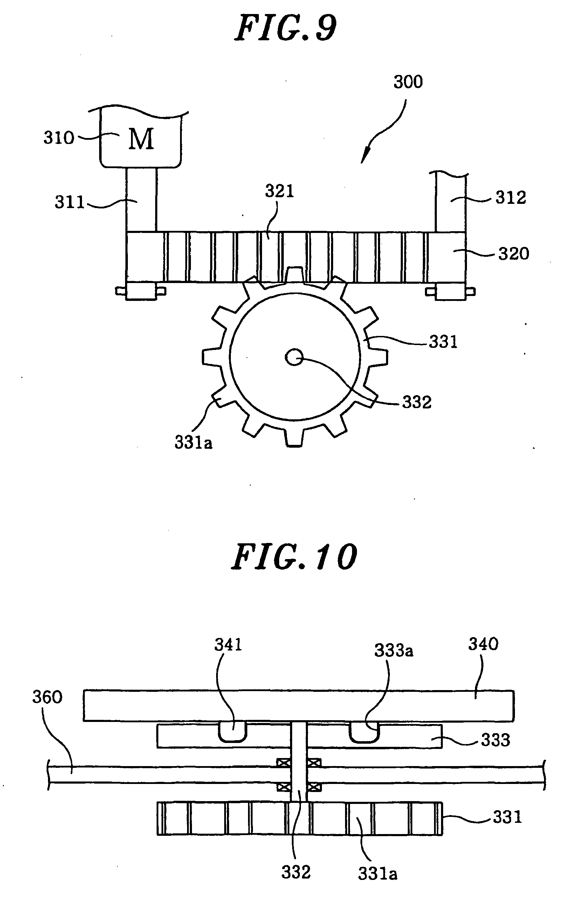

Hereinafter, a microwave oven provided with a separate heater cooking chamber in accordance with the fourth embodiment, which is not part of the present invention with reference to Figs. 9 and 10.

As shown in Figs. 9 and 10, the microwave oven 210 of the second embodiment includes a driving unit 300 for rotating a pan 340 on which a foodstuff, e.g., pizza, is laid; and a pan supporting unit 330, rotationally installed at an approximately central portion of a bottom wall 360 of a heater cooking chamber (not shown in this embodiment), for supporting the pan 340.

The driving unit 300 includes a motor 310 having a first rotating shaft 311, the motor 310 being located below the bottom wall 360 of the heater cooking chamber, a second rotating shaft 312 disposed parallel to and spaced apart by a distance from the first rotating shaft 311 and an endless belt member 320 wound on the first and the second rotating shaft 311, 312, the belt member 320 being rotated when the first rotating shaft 311 of the motor 310 is rotated.

Preferably, the second rotating shaft is rotatably installed to facilitate the rotation of the belt member 320.

The belt member 320 has a plurality of first teeth 321 provided on an outer circumferential surface thereof at regular intervals. The first teeth 321 have a configuration identical to that of teeth of a conventional gear.

Further, it is preferable that in order to prevent a possible slip between the shafts 311, 312 and the belt member 20, the shafts 311, 312 have a plurality of protrusions (not shown) circumferentially formed on end portions thereof and the belt member 320 has a plurality of grooves (not shown) circumferentially formed on an inner surface thereof such that the protrusions and the grooves are correspondingly engaged with each other.

The pan supporting unit 330 has a supporting shaft 332 rotatably mounted at the approximately central portion of the bottom wall 360 of the heater cooking chamber, the supporting shaft 332 extending through the bottom wall 360; a disc-shaped driven plate 331 fitted on a lower end portion of the supporting shaft 332; and a supporting plate 333, fitted on an upper end portion of the supporting shaft 332, for mounting thereon the pan 340.

The driven plate 331 has at its outer circumferential surface a plurality of second teeth 321 spaced apart from each other at regular intervals, the second teeth 321 being meshed with the first teeth 321 formed on the outer circumferential surface of the belt member 320.

A plurality of, e.g., three, grooves 333a are formed in a top surface of the supporting plate 333 and a plurality of, e.g., three, protuberances 341 are provided on a bottom surface of the pan 340. When the pan 340 is mounted on the supporting plate 333, the protuberances 341 are fitted into the respective grooves 333a. In this way, the pan 340 can be detachably mounted on the supporting plate 333 without any slip therebetween while the supporting plate 333 is rotated.

Operation of the microwave oven of the fourth embodiment will now be described.

When the motor 310 is actuated, the first rotating shaft 311 thereof is rotated. The belt member 320 wound on the first rotating shaft 311 and the second rotating shaft 312 is rotated according to the rotation of the first rotating shaft 311.

With the rotation of the belt member 320, the driven plate 331 comes to rotate since the second teeth 331a are meshed with the first teeth 321 of the belt member 320. Accordingly, the supporting shaft 332 and hence the supporting plate 333 are also rotated together with the driven plate 331, thereby rotating the pan 340 placed on the supporting plate 333.

According to the microwave oven of the fourth embodiment, since the pan 340 is rotated while the pizza is cooked, the pizza can be uniformly heated.

### (Fifth preferred embodiment)

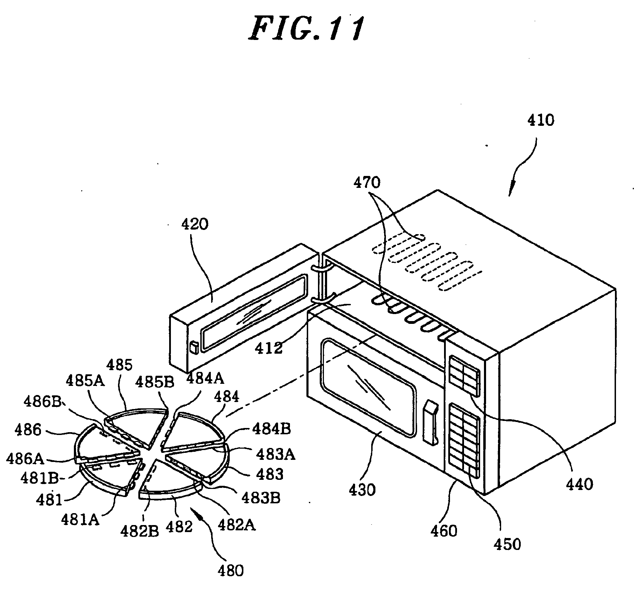

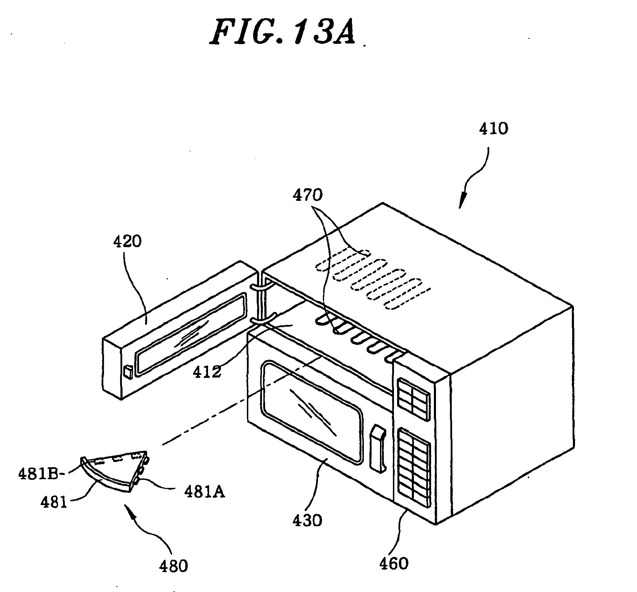

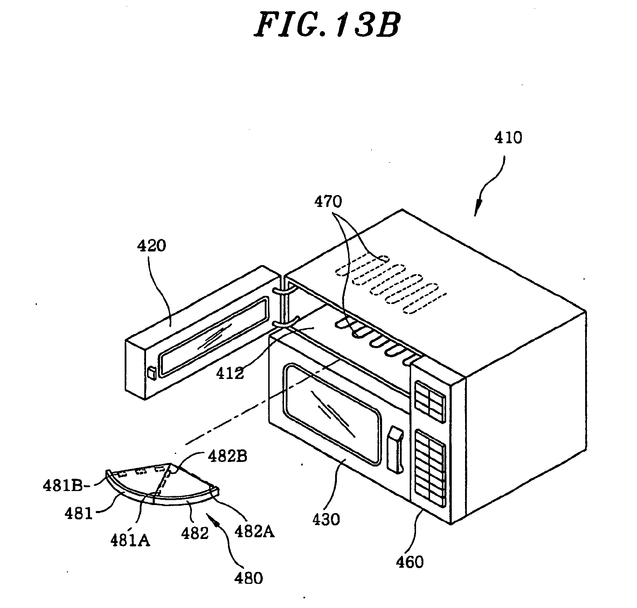

Hereinafter, a microwave oven provided with a separate heater cooking chamber in accordance with the fifth embodiment, which is not part of the present invention with reference to Figs. 11 to 14.

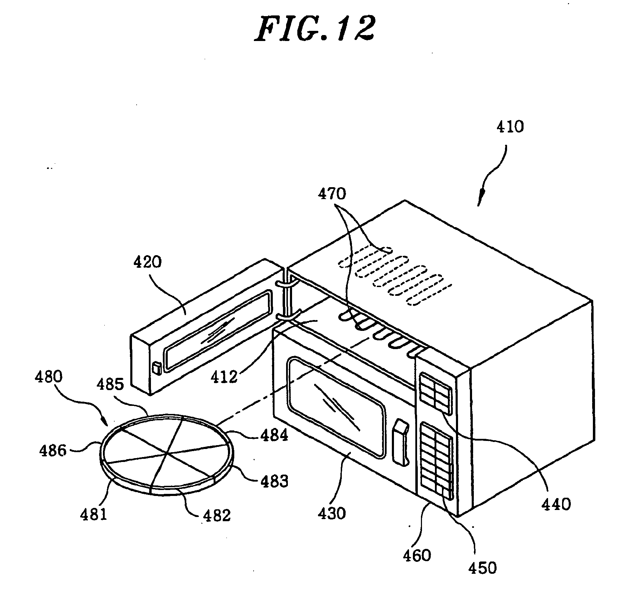

As shown in Figs. 11 and 12, the microwave oven 410 of the fifth embodiment includes a microwave cooking chamber (not shown), an electric component compartment (not shown), and a heater cooking chamber 412 provided above the microwave cooking chamber.

The heater cooking chamber 412 is for cooking a foodstuff such as a pizza which is difficult to be properly cooked by only a microwave. A pair of heaters 470 are installed as a heating unit at a top wall and a bottom wall of the heater cooking chamber 412, respectively, and a pan 480 on which, e.g., a pizza crust having thereon toppings is placed is inserted into the heater cooking chamber 412.

In this embodiment, the pan 480 is constructed by a plurality of conical-shaped pieces. Each of the pieces has at both sides at least one fitting projection and at least one fitting hole, respectively, so that the pieces can be assembled with each other.

Specifically, as shown in Fig. 11, the pan 480 is constructed by six conical-shaped pieces, i.e., a first piece 481, a second piece 482, a third piece 483, a fourth piece 484, a fifth piece 485 and a sixth piece 486. Each of the pieces 481 to 486 has at a first side surface one or more fitting projection 481A to 486A and at a second side surface one or more fitting hole 481B to 486B corresponding to the fitting projections 481A to 486A. The pieces 481 to 486 can be assembled with each other by fitting, e.g., the projection 481A of the first piece 481 into the corresponding hole 482B of the second piece 482.

In this embodiment, although the pan 480 is constructed by the six pieces each having an included angle of 60°, it is appreciated that the number of the pieces

In case a complete circular pizza is cooked, all of the pieces 481 to 486 are assembled and the circular pizza is placed on the assembled pieces 481 to 486.

Meanwhile, in case a part of the circular pizza, i.e., a conical pizza piece is cooked, parts of the pieces 481 to 486 are assembled to have a size corresponding to the conical pizza piece.

For example, as shown in Fig. 12A, when one conical pizza piece is cooked, it is placed on one of the pieces 481 to 486, e.g., the first piece 481 which is, in turn, inserted into the heater cooking chamber 412. Then, the heaters 470 are energized to cook the pizza piece.

Further, as shown in Fig. 12B, when two conical pizza pieces are cooked, two of the pieces 481 to 486, e.g., the first and the second piece 481 and 482, are assembled together by fitting the fitting projections 481A provided on the first side surface of the piece 481 into the corresponding fitting holes 482B formed on the second side surface of the piece 482. The two pizza pieces are put on the first and the second piece 481 and 482 assembled together, respectively. Then, the heaters 470 are actuated to cook the pizza pieces.

Similarly to the above, it is appreciated to those skilled in the art that three, four, five or six pizza pieces can be assembled together; and, therefore, detailed explanations thereon will be omitted.

Hereinafter, modifications of the fifth embodiment of the present invention will be described.

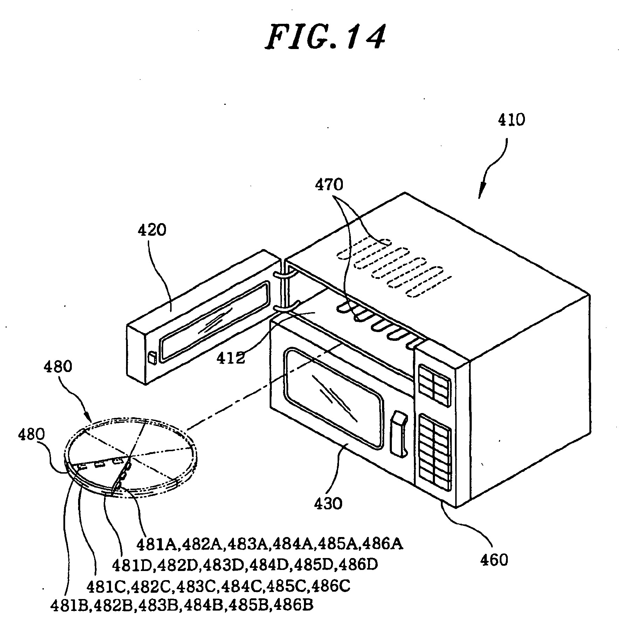

Referring to Fig. 14, there are provided on an outer surface of each piece 481 to 486 a center pick-up groove 481C to 486C and two side pick-up grooves 481D to 486D. Preferably, the length of the side pick-up groove 481D to 486D is one half of that of the center pick-up groove 481C to 486C such that the total length of the adjacent two side pick-up grooves 481D to 486D assembled together becomes identical to that of the center pick-up groove 481C to 486C. Upon taking out the pan 480 from the heater cooking chamber 412, a user can use a thin pick-up tool (not shown) which can be inserted into the center pick-up groove 481C to 486C or the adjacent side pick-up grooves 481D to 486D.

### (Sixth preferred embodiment)

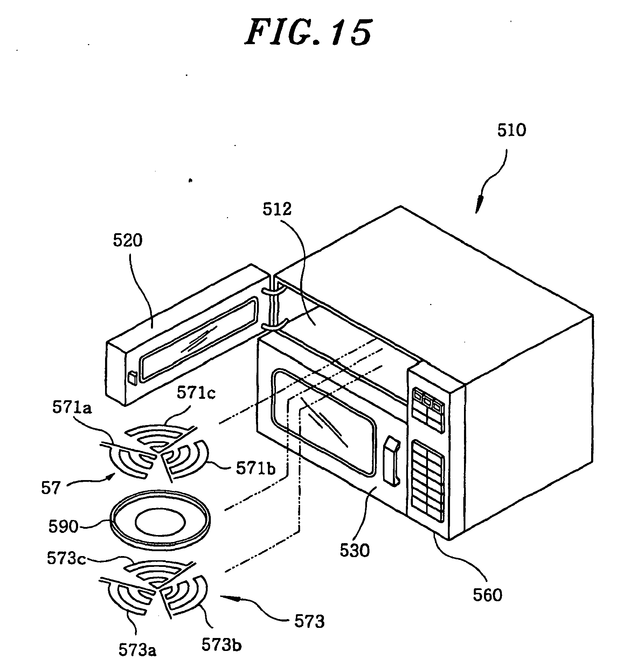

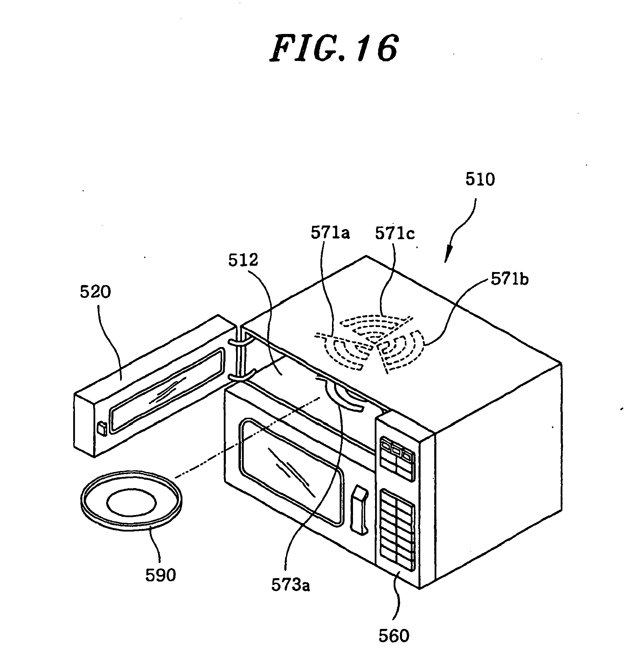

Hereinafter, a microwave oven provided with a separate heater cooking chamber in accordance with the sixth embodiment of the present invention with reference to Figs. 15 to 17.

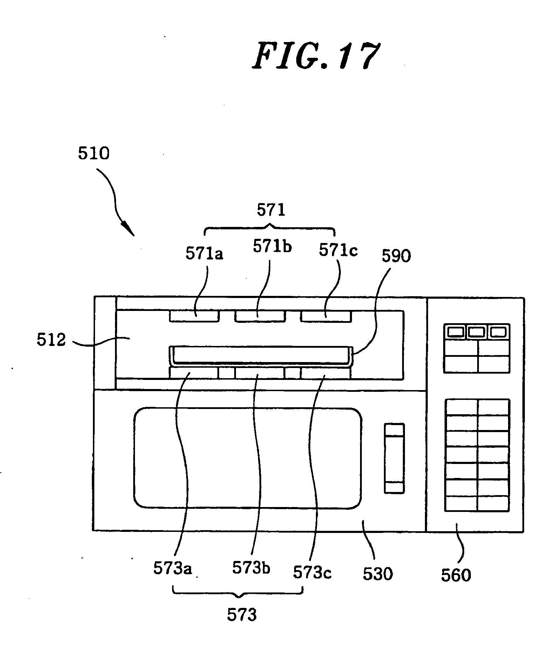

As shown in Figs. 15 and 17, the microwave oven 510 of the sixth embodiment includes a microwave cooking chamber (not shown), an electric component compartment (not shown), and a heater cooking chamber 512 provided above the microwave cooking chamber.

The heater cooking chamber 512 is for cooking a foodstuff such as a pizza which is difficult to be properly cooked by only a microwave. An upper and a lower heater 571, 573 are installed as a heating unit at a top wall and a bottom wall of the heater cooking chamber 512, respectively, and a pan 580 on which, e.g., a pizza crust having thereon toppings is placed is inserted into the heater cooking chamber 512.

In this embodiment, the upper and the lower heater 571, 573 are each constructed by a plurality of, e.g., three, conical-shaped heaters as a whole.

Specifically, the upper heater 571 is constructed by a first upper heater 571a, a second upper heater 571b and a third upper heater 571c each of which is extended serpentinely to form a conical shape as a whole and arranged in a circular array. Further, the lower heater 573 is also constructed by a first lower heater 573a, a second lower heater 573b and a third lower heater 573c each of which is extended serpentinely to form a conical shape as a whole and arranged in a circular array. The first upper heater 571a and the first lower heater 573a are disposed vertically corresponding to each other to form a first pair; the second upper heater 571b and the second lower heater 573b, a second pair; and the third upper heater 571c and the third lower heater 573c, a third pair. Each pair of heaters 571a and 573a, 571b and 573b, 571c and 573c can be actuated independently.

Operation of the microwave oven of the sixth embodiment will now be described.

When cooking one conical-shaped pizza piece, a user puts it on the pan 590 and inserts them into the heater cooking chamber 512. The user then manipulates a control panel 560 to actuate, e.g., the first pair of heaters 571a and 573a corresponding to the location of the pizza piece inserted in the heater cooking chamber 512.

Meanwhile, when cooking two conical-shaped pizza pieces, the user puts them on the pan 590 and inserts them into the heater cooking chamber 512. The user then manipulates the control panel 560 to actuate, e.g., the first and the second pair of heaters 571a and 573a, 571b and 573b corresponding to the locations of the pizza pieces inserted in the heater cooking chamber 512.

Further, when cooking a complete circular pizza, the user puts it on the pan 590 and inserts them into the heater cooking chamber 512. The user then manipulates the control panel 560 to actuate all pairs of the heaters 571a and 573a; 571b and 573b, 571c and 573c.

According to the microwave oven of the sixth embodiment, when a conical-shaped pizza piece is cooked, the heaters 571, 573 can be efficiently actuated, thereby preventing a superfluous heating.

In this embodiment, although there has been described that the upper heater 571 and the lower heater 573 are each constructed by three conical-shaped heaters, the present invention is not limited thereto and the number of the conical-shaped heaters may be properly varied depending on the size of the heater cooking chamber 512

### (Seventh preferred embodiment)

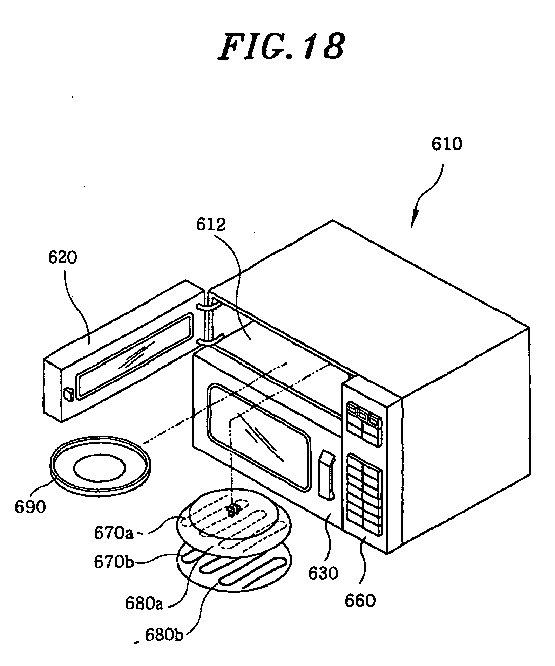

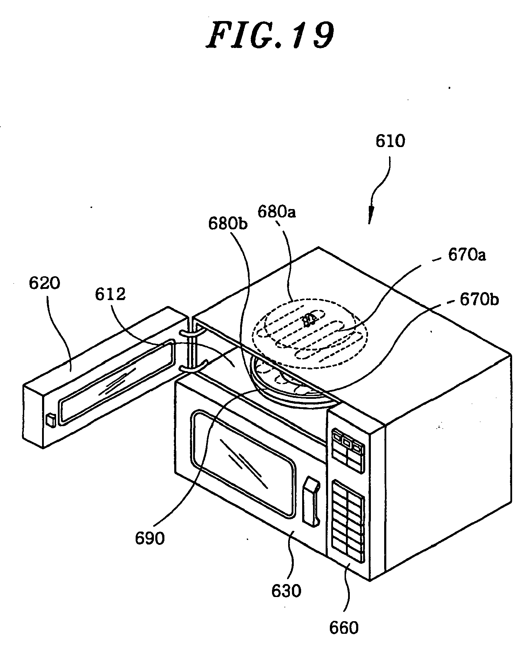

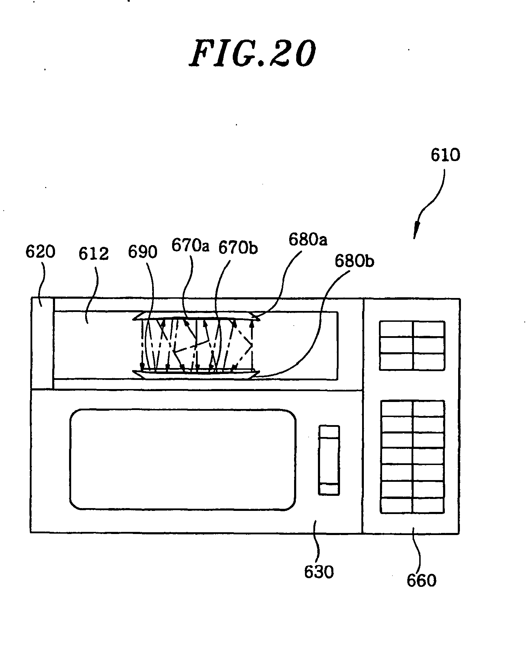

Hereinafter, a microwave oven provided with a separate heater cooking chamber in accordance with the seventh embodiment, which is not part of the present invention with reference to Figs. 18 to 20.

As shown in Figs. 18 to 20, the microwave oven 610 of the seventh embodiment includes a microwave cooking chamber (not shown) and a heater cooking chamber 612 provided above the microwave cooking chamber. A control panel 660 is provided at a front side of the microwave oven.

The heater cooking chamber 612 is for cooking a foodstuff such as a pizza which is difficult to be properly cooked by only a microwave. An upper and a lower heater 670a, 670b are installed as a heating unit at a top wall and a bottom wall of the heater cooking chamber 612, respectively, and a pan 690 on which, e.g., a pizza crust having thereon toppings is placed is inserted into the heater cooking chamber 612.

Further, an upper and a lower dish-shaped reflector 680a and 680b are disposed between the upper heater 670a and the top wall and between the lower heater 670b and the bottom wall, respectively.

In this embodiment, although there have been described the dish-shaped reflectors 680a, 680b, the reflectors may be formed in various shapes.

In case of cooking, e.g., a pizza, a pizza crust having thereon toppings is placed on the pan 690 and the pan 690 is inserted into the heater cooking chamber 612. A user closes a door 620 and manipulates the control panel 660 to actuate the upper and the lower heater 670a, 670b. During the cooking of the pizza, the reflectors 680a, 680b reflect parts of heats generated from the heaters 670a, 670b to be directed toward the pizza crust on the pan 690. In this way, the heats generated from the heaters 670a, 670b can be more concentratively transferred to the pizza crust, so that the latter can be more uniformly heated.

According to the microwave oven in accordance with the present invention, by providing the separate heater cooking chamber, it comes to be possible to cook a food product, e.g., pizza that is difficult to be properly cooked by using only a microwave. Further, a microwave cooking and a heating cooking can be carried out at the same time in the different cooking chambers.

## Claims

1. A microwave oven comprising:
a microwave cooking chamber;
a heater cooking chamber (512) provided separately from the microwave cooking chamber;
a pan (590) on which a foodstuff is put, the pan (590) being inserted into the heater cooking chamber (512);
a door (520) openably closing the heater cooking chamber (512); and
a plurality of heating units installed in the heater cooking chamber (512), each including an upper conical-shaped heater (571a-c) and a lower conical-shaped heater (573a-c);
**characterized by**
the heating units being controlled independently.

2. A microwave oven comprising:
a microwave cooking chamber (212);
a plurality of heater cooking chambers (216) provided separately from the microwave cooking chamber (212);
a plurality of pans (240) on each of which a foodstuff is put, the pans (240) being inserted into the respective heater cooking chamber (216);
a plurality of heating units each installed in one of the heater cooking chambers (216), each thereof including an upper heater and a lower heater (230); and
a plurality of doors (250) openably closing the respective heater cooking chambers (216);
**characterized by**
the plurality of heater cooking chambers (216) being configured same as each other; and
the heating units being controlled independently.

3. The microwave oven of claim 1 or 2, wherein each of the upper heater and the lower heater is installed at a top wall and a bottom wall of the heater cooking chamber (512; 216), respectively, and the upper and the lower heaters are serpentinely extended in shapes of circular-sectors as a whole.

4. The microwave oven of claim 1, wherein the pan (590) is constructed by a plurality of pan pieces. (481, ..., 486) in shapes of circular-sectors and each of the pan pieces (481, ..., 486) has at one side surface one or more projections (481A, ..., 486A) and at the other side surface one or more holes (481B, ..., 486B), the pan pieces (481, ..., 486) being detachably assembled together by fitting the projection of one pan piece into the hole of another pan piece.

5. The microwave oven of claim 2, wherein each of the pans (240) is constructed by a plurality of pan pieces (481, ..., 486) in shapes of circular-sectors and each of the pan pieces (481, ..., 486) has at one side surface one or more projections (481A, ..., 486A) and at the other side surface one or more holes (481B, ..., 486B), the pan pieces being detachably assembled together by fitting the projection of one pan piece into the hole of another pan piece.

## Patentansprüche

1. Mikrowellenofen mit:
einer Mikrowellenkochkammer;
einer Wärmekochkammer (512), die separat von der Mikrowellenkochkammer vorgesehen ist;
einer Pfanne (590), auf die ein Nahrungsmittel gelegt wird, wobei die Pfanne (590) in die Wärmekochkammer (512) eingebracht wird;
einer Tür (520), die die Wärmekochkammer (512) aufmachbar verschließt; und
einer Mehrzahl von Wärmeeinheiten, die in der Wärmekochkammer (512) installiert sind, wobei jeder derselben eine obere konisch geformte Wärmeeinrichtung (571a-c) und eine untere konisch geformte Wärmeeinrichtung (573 a-c) aufweist;
**gekennzeichnet durch**
die Wärmeeinheiten, die unabhängig gesteuert sind.

2. Mikrowellenofen mit:
einer Mikrowellenkochkammer (212);
einer Mehrzahl von Wärmekochkammern (216), die separat von der Mikrowellenkochkammer (212) vorgesehen sind;
einer Mehrzahl von Pfannen (240), auf die jeweils ein Nahrungsmittel gelegt wird, wobei die Pfannen (240) in die entsprechende Wärmekochkammer (216) eingebracht werden;
einer Mehrzahl von Wärmeeinheiten, die jeweils in einer der Wärmekochkammern (216) installiert sind, wobei jede derselben eine obere Wärmeeinrichtung und eine untere Wärmeeinrichtung (230) aufweist; und
einer Mehrzahl von Türen (250), die die entsprechende Wärmekochkammer (216) aufmachbar verschließen;
**gekennzeichnet durch**
die Mehrzahl von Wärmekochkammern (216), die gleich zu einander konfiguriert sind; und
die Wärmeeinheiten, die unabhängig gesteuert sind.

3. Mikrowellenofen nach Anspruch 1 oder 2, bei dem jede der oberen Wärmeeinrichtung und der unteren Wärmeeinrichtung an einer oberen Wand bzw. einer unteren Wand der Wärmekochkammer (512; 216) installiert ist, und sich die oberen und die unteren Wärmeeinrichtungen im Ganzen in Form von kreisförmigen Sektoren schlangenförmig erstrecken.

4. Mikrowellenofen nach Anspruch 1, bei dem die Pfanne (590) durch eine Mehrzahl von Pfannenstücken (481, ..., 486) in Formen von kreisförmigen Sektoren aufgebaut ist und jedes der Pfannenstücke (481, ..., 486) an einer seitlichen Oberfläche einen oder mehrere Vorsprünge (481A, ..., 486A) und an der anderen seitlichen Oberfläche ein oder mehrere Löcher (481B, ..., 486B) aufweist, wobei die Pfannenstücke (481, ..., 486) lösbar mit einander verbunden werden, indem der Vorsprung eines Pfannenstücks in das Loch eines anderen Pfannenstücks eingepasst wird.

5. Mikrowellenofen nach Anspruch 2, bei dem jeder der Pfannen (240) durch eine Mehrzahl von Pfannenstücken (481, ..., 486) in Formen von kreisförmigen Sektoren aufgebaut ist und jedes der Pfannenstücke (481, ..., 486) an einer seitlichen Oberfläche einen oder mehrere Vorsprünge (481A, ..., 486A) und an der anderen seitlichen Oberfläche ein oder mehrere Löcher (481B, ... 486B) aufweist, wobei die Pfannenstücke lösbar miteinander verbunden werden, indem der Vorsprung eines Pfannenstücks in das Loch eines anderen Pfannenstücks eingepasst wird.

## Revendications

1. Four à micro-ondes comprenant :
une chambre de cuisson par micro-ondes ;
une chambre de cuisson par dispositif de chauffage (512) prévue séparément de la chambre de cuisson par micro-ondes ;
un plateau (590) sur lequel la nourriture est placée, le plateau (590) étant inséré dans la chambre de cuisson par dispositif de chauffage (512) ;
une porte (520) fermant, de manière à pouvoir s'ouvrir, la chambre de cuisson par dispositif de chauffage (512) ; et
une pluralité d'unités de chauffage installées dans la chambre de cuisson par dispositif de chauffage (512), chacune comprenant un dispositif de chauffage supérieur en forme de cône (571a-c) et un dispositif de chauffage inférieur en forme de cône (573a-c) ;
**caractérisé par**
les unités de chauffage qui sont contrôlées de manière indépendante.

2. Four à micro-ondes comprenant :
une chambre de cuisson par micro-ondes (212) ;
une pluralité de chambres de cuisson par dispositif de chauffage (216) prévues séparément de la chambre de cuisson par micro-ondes (212) ;
une pluralité de plateaux (240) sur chacun desquels un aliment est placé, les plateaux (240) étant insérés dans la chambre de cuisson par dispositif de chauffage (216) respective ;
une pluralité d'unités de chauffage, chacune installée dans l'une des chambres de cuisson par dispositif de chauffage (216), chacune comprenant un dispositif de chauffage supérieur et un dispositif de chauffage inférieur (230) ; et
une pluralité de portes (250) fermant de manière pouvant s'ouvrir, les chambres de cuisson par dispositif de chauffage (216) respectives ;
**caractérisé par**
la pluralité de chambres de cuisson par dispositif de chauffage (216) qui sont configurées de la même manière les unes par rapport aux autres ; et les unités de chauffage sont contrôlées de manière indépendante.

3. Four à micro-ondes selon la revendication 1 ou 2, dans lequel chacun parmi le dispositif de chauffage supérieur et le dispositif de chauffage inférieur est installé au niveau d'une paroi supérieure et d'une paroi inférieure de la chambre de cuisson par dispositif de chauffage (512 ; 216), respectivement, et les dispositifs de chauffage supérieur et inférieur sont étendus en forme de serpentin selon des formes de secteur circulaire dans leur ensemble.

4. Four à micro-ondes selon la revendication 1, dans lequel le plateau (590) est construit par une pluralité de pièces de plateau (481, ..., 486) selon des formes de secteur circulaire et chacune des pièces de plateau (481, ..., 486) a au niveau d'une surface latérale, une ou plusieurs saillies (481A, ..., 486A) et au niveau de l'autre surface latérale, un ou plusieurs trous (481B, ..., 486B), les pièces de plateau (481, ..., 486) étant assemblées de manière détachable ensemble en montant la saillie d'une pièce de plateau dans le trou d'une autre pièce de plateau.

5. Four à micro-ondes selon la revendication 2, dans lequel chacun des plateaux (240) est construit par une pluralité de pièces de plateau (481, ..., 486) selon des formes de secteur circulaire et chacune des pièces de plateau (481, ..., 486) a au niveau d'une surface latérale, une ou plusieurs saillies (481A, ..., 486A) et au niveau de l'autre surface latérale, un ou plusieurs trous (481B, ..., 486B), les pièces de plateau étant assemblées de manière détachable ensemble en montant la saillie d'une pièce de plateau dans le trou de l'autre pièce de plateau.
